# EUROPÄISCHE PATENTSCHRIFT

(11) **EP 2 921 842 B1**
(45) Veröffentlichungstag und Bekanntmachung des Hinweises auf die Patenterteilung: **24.06.2020**
(21) Anmeldenummer: 14000991.1
(22) Anmeldetag: 18.03.2014
(51) Int. Cl.: G01N 3/32, G01N 3/38

(54) **Resonanzprüfmaschine**
Resonance testing machine
Machine de surveillance par résonance

(43) Veröffentlichungstag der Anmeldung: 23.09.2015
(73) Patentinhaber: Russenberger Prüfmaschinen AG, 8212 Neuhausen am Rheinfall (CH)
(72) Erfinder: Berchtold, Jürg, 8200 Schaffhausen (CH)
(74) Vertreter: Gernet Althaus IP AG

(56) Entgegenhaltungen:
- DE-A1- 4 341 127
- DE-A1- 10 206 710
- US-A- 4 445 381

## Beschreibung

Die Erfindung betrifft eine Resonanzprüfmaschine nach dem Oberbegriff von Anspruch 1.

In der Werkstoffprüfung sind Untersuchungen mit dynamischen, mechanischen Belastungsänderungen von Prüfkörpern weit herum bekannt. Dazu werden unterschiedlichste Arten von Prüfmaschinentypen mit verschiedenen Antriebsarten eingesetzt, wobei neben mechanischen Systemen insbesondere drei Antriebsarten unterschieden werden, nämlich hydraulische Systeme, Ultraschallsysteme und elektromagnetische Systeme.

Hydraulische Systeme erreichen eine Arbeitsfrequenz, d.h. eine auf einen Prüfling zu übertragende Belastungsfrequenz, von weniger als 1000 Hz und benötigen einen grossen Energieeinsatz, da ein mit der Arbeitsfrequenz gesteuerter Öldruck einen Arbeitskolben bewegen muss. Weiter bedingen hydraulische Systeme üblicherweise mehrstufig aufgebaute Ventilsteuerungen, was oft hohe Unterhaltsaufwendungen nötig macht.

Ultraschallsysteme, d.h. Schwingsysteme mit einem Ultraschallgeber, erreichen typischerweise 15'000 bis 20'000 Lastwechsel pro Sekunde. Somit weisen mit Ultraschall erregte Systeme zwar eine hohe Arbeitsfrequenz auf, allerdings führen diese hohen Frequenzen zu oft unzulässiger Erwärmung der Prüfproben, wodurch die Materialtests üblicherweise intermittierend, d.h. mit Unterbrechungen für eine zwischenzeitliche Abkühlung der Prüfproben, durchgeführt werden müssen. Bei einer derartigen Werkstoffprüfung bleibt jedoch offen, wie die Lastwechsel beim Ein- und Ausschwingen eines Intervalls zu bewerten sind. Durch die Abkühlintervalle wird die Dauer der Werkstoffprüfung - trotz der hohen Arbeitsfrequenzen - stark erhöht. Im Weiteren können aus physikalischen Gründen nicht alle Probenformen mit dieser Methode geprüft werden. Zudem erfolgt die Messung der Materialbeanspruchung im Prüfkörper indirekt.

Elektromagnetische Systeme werden allgemein in Resonanz betrieben und werden üblicherweise mit einem oder mehreren Elektromagneten mit Arbeitsfrequenzen (Grundfrequenz der Eigenschwingung) von typischerweise 30 bis 250 Hz, d.h. Lastwechsel pro Sekunde erregt. Solche Systeme arbeiten als mechanische Resonatoren mit elektromagnetischer Erregung.

Eine mechanische Resonanzprüfmaschine mit elektromagnetischer Erregung wird in DE-A1-31 02 778 oder US 4,445,381 A beschrieben. Diese Resonanzprüfmaschine weist eine seismische Masse, ein daran festgelegtes Gestell mit einer waagrechten Traverse, einen mittels einer Vorspannfeder federnd von der Traverse gehaltener Schwingkörper und einen zwischen dem Schwingkörper und dem Prüfkörper gehaltenen Schwingungserreger. Der Prüfkörper wird dabei zwischen dem Schwingkörper und der seismischen Masse angeordnet. Zudem weist die Resonanzprüfmaschine noch eine zentrale Gewindespindel zwischen der Traverse und der Vorspannfeder auf, um der bei einer Schwingfestigkeitsprüfung auf den Prüfkörper ausgeübten Schwinglast eine statische Last zu überlagern. Der Schwingungserreger ist mit zwei für die Schwingungsanregung bezüglich einander bewegbaren Teilen versehen, von denen der eine mit dem Schwingköper und der andere mit einem Halteelement für den Prüfkörper verbunden ist. Die beiden Schwingungserregerteile sind durch stabförmige, elastische Glieder miteinander verbunden, wobei deren Länge derart bemessen ist, dass zwischen den beiden Schwingungserregerteilen bei allen vorgesehenen Betriebsbedingungen ein Luftspalt vorhanden ist, der eine Schwingungserregung mit gutem Wirkungsgrad ermöglicht.

Die Resonanzprüfmaschine gemäss DE-A1-31 02 778 wird auch als drei-Massen Resonanzprüfmaschine bezeichnet, enthaltend den Schwingkörper, die Masse des mit dem Haltelement verbundenen Schwingungserregerteils sowie die seismische Masse. Dabei liegen der Schwingkörper, der Schwingungserreger mit den beiden Schwingungserregerteilen und den elastischen Gliedern, der Prüfkörper und die seismische Masse allesamt in einer Achse, nämlich in einer Normalen zur Bodenfläche. Bei dieser Anordnung ergibt sich die die Resonanzfrequenz bestimmende Federkonstante des Systems aus der Federkonstanten der elastischen Elemente des Schwingungserregers und derjenigen des Prüfkörpers. Die Federkonstante f einer Stabfeder ist allgemein proportional zum Elastizitätsmodul E der Stabfeder, d.h. f = E · A/ Iₒ, wobei A die Querschnittsfläche der Stabfeder und Iₒ die mechanisch unbelastete Länge des Federstabes bezeichnet.

DE 102 06 710 A1 beschreibt eine Vorrichtung zum Messen von Probeneigenschaften bei Dauerschwingversuchen insbesondere viskoelastischer Proben, wobei die Vorrichtung eine thermostatische Kammer zur Aufnahme der Probe und Linearmotoren zur Erzeugung einer dynamischen Last aufweist.

DE 43 41 127 A1 beschreibt eine zwei Massen-Resonanzprüfmaschine umfassend einen federnd abgestützten Sockel und einen vermittels eines Joches am Sockel schwingfähig angeordneten Schwingkörper. Am Schwingkörper ist ein elektromagnetischer Schwingungserreger angebracht und der Prüfkörper wird zwischen Schwingungserreger und Sockel gehalten. Der Sockel steht über den Prüfkörper, eine Kraftmessdose und relativ steife Zugstäbe und eine Traverse mit dem Schwingkörper in Eingriff. Im Resonanzbereich wird die Frequenz hauptsächlich durch die Massen des Schwingkörpers und die Gegenmasse des Sockels sowie den Elastizitäten des Prüfkörpers und der Zugstäbe bestimmt.

Für die Ermüdungsprüfung von Werkstoffen in der Industrie und in der Materialforschung werden heute Lastwechselzahlen in der Grössenordnung von einigen Dutzend (,Low Cycle Fatigue' oder LCF) bis ein vielfaches von 10⁶ (,High Cycle Fatigue' oder HCF) verlangt. Teilweise werden sogar Lastwechselzahlen von bis zu 10⁹ (,Very High Cycle Fatigue' oder VHCF) verlangt. Um die Materialprüfungen innerhalb einer wirtschaftlich oder technisch vertretbaren Prüfdauer durchzuführen, müssen deshalb die Arbeitsfrequenzen erhöht werden. Die bisher bekannten Systeme lassen sich jedoch nicht ohne weiteres auf die heutigen Anforderungen betreffend den deutlich höheren Arbeitsfrequenzen anpassen.

Aufgabe vorliegender Erfindung ist die Bereitstellung einer kompakt gebauten Resonanzprüfmaschine, d.h. eine Prüfmaschine mit einem elektromagnetisch erregbaren Resonator zur Schwingfestigkeitsprüfung von zu untersuchenden Prüfkörpern, dessen Arbeitsfrequenz im Dauereinsatz zwischen 1000 und 2000 Hz liegt.

Zur Lösung dieser Aufgabe wird die Bereitstellung einer Resonanzprüfmaschine mit den Merkmalen von Anspruch 1 vorgeschlagen.

Bevorzugte Ausführungen sind in den abhängigen Ansprüchen beschrieben.

Die erfindungsgemässe Resonanzprüfmaschine ist eine vier-Massen Resonanzprüfmaschine und enthält in Serie drei aneinander gekoppelte Schwingsysteme mit vier beteiligten Massen, nämlich die seismische Masse, der Schwingkörper, der Schwingkopf und die Traverse. Die seismische Masse und die Masse der Traverse sind gegenüber den Massen des Schwingkörpers und des Schwingkopfes wesentlich grösser. Der Ausdruck ,seismische Masse' bedeutet eine gegenüber den anderen am einem Schwingsystem beteiligten Massen sehr grosse Masse.

Die in Serie vorhandenen Schwingsysteme betreffen einerseits den Resonator und zwei Sub-Schwingsysteme, wobei der Resonator zwischen den beiden Sub-Schwingsystemen angeordnet ist. Dabei ist der Resonator derart ausgelegt, dass seine Eigenfrequenz im Bereich zwischen 1000 und 2000 Hz, besonders bevorzugt im Bereich von 1000 bis 1500 Hz, liegt. Diese Auslegung des Resonators geschieht durch entsprechende Wahl der beteiligten Massen, nämlich der Masse des Schwingkörpers und der Masse des Schwingkopfes, sowie der Auslegung der zwischen diesen Massen liegenden Schwingfeder, wobei die Auslegung insbesondere die Wahl des Elastizitätsmoduls (kurz: E-Module) und die Dimensionierung der Schwingfeder betrifft.

Der Schwingkopf, der Prüfkörper und die Traverse sind somit Teil des in Achse x schwingfähigen zweiten Sub-Schwingsystems, dessen Schwingfrequenz durch den Resonator bestimmt wird, wobei der Resonator aus dem Schwingkopf, der Schwingfeder und dem Schwingkörper besteht. Der Schwingkörper wird auch als Gegenmasse bezeichnet.

Das erste Sub-Schwingsystem wird durch die seismische Masse, den Schwingkörper und eine Anzahl dazwischen liegender Federelemente gebildet, wobei parallel zu den Federelementen wenigstens ein elektromagnetischer Schwingungserreger vorhanden ist. Jeder Schwingungserreger besteht aus zwei Schwingungserregerteilen, nämlich einem Elektromagneten enthaltend einen Kern mit einer Spule sowie einer Ankerplatte. Die Federkonstanten der Federelemente sind derart gewählt, dass bei allen vorgesehenen Betriebsbedingungen ein Luftspalt zwischen der Ankerplatte und dem Elektromagneten von typischerweise 0.1 bis 0.5 mm bestehen bleibt.

Das zweite Sub-Schwingsystem enthält die Massen des Schwingkopfs und der Traverse und als Federelement wirkt der zwischen die beiden genannten Massen eingespannte Prüfkörper.

Die beiden Sub-Schwingsysteme und der Resonator liegen alle in einer Achse, nämlich entlang der Achse x, welche typischerweise senkrecht zur Bodenfläche, auf welche die Resonanzprüfmaschine gestellt wird, liegt.

Die erfindungsgemässe Resonanzprüfmaschine benutzt somit den Schwingkopf einerseits als eine Masse des Resonators wie auch als eine Masse für das zweite Sub-Schwingsystem. Zudem wird der Schwingkörper einerseits als eine Masse des ersten Sub-Schwingsystems verwendet, wie auch für den Resonator.

Die erfindungsgemässe Resonanzprüfmaschine dient zur Schwingfestigkeitsprüfung von zwischen einer Traverse und einem Schwingkopf der Prüfmaschine eingespannten Prüfkörpern. Dabei bilden der Schwingkopf, der Prüfkörper und die Traverse Teil eines in einer Achse x schwingbaren zweiten Sub-Schwingsystems. Die Anregung des Schwingkopfes geschieht dabei durch einen Resonator, welcher in Serie zum zweiten Sub-Schwingsystem entlang der Achse x angeordnet ist. Der Resonator ist derart ausgelegt, dass er mit einer Eigenfrequenz zwischen 1000 und 2000 Hz schwingen kann. Das durch den Schwingkopf angeregte zweite Sub-Schwingsystem schwingt mit einer überkritischen Frequenz, d.h. einer gegenüber der Eigenfrequenz des zweiten Sub-Schwingsystems höheren Frequenz. Die Eigenfrequenz des zweiten Sub-Schwingsystems liegt typischerweise zwischen 300 und 600 Hz. Der Schwingkopf schwingt jedoch mit einer Frequenz zwischen 1000 und 2000 Hz.

Der Resonator wird durch das erste Sub-Schwingsystem erregt, d.h. in eine harmonische Schwingung versetzt. Das erste Schwingsystem schwingt ebenfalls mit einer überkritischen Frequenz, d.h. einer gegenüber der Eigenfrequenz des ersten Sub-Schwingsystems höheren Frequenz. Die Eigenfrequenz des ersten Sub-Schwingsystems liegt typischerweise zwischen 100 und 300 Hz. Die Anregung des ersten Sub-Schwingsystems bestehend aus dem Schwingkörper, der seismischen Masse und Federelementen geschieht durch einen oder mehrere Schwingungserreger. Jeder Schwingungserreger enthält dabei eine mit dem Schwingkörper mechanisch starr verbundene Ankerplatte und einen mit der seismischen Masse starr verbundenen Elektromagneten. Der Elektromagnet enthält dabei einen Kern mit einer elektrisch leitenden Spule. Die elektromagnetischen Schwingungserreger sind immer parallel zu den Federelementen angeordnet.

Der Schwingkopf ist über die Schwingfeder mit dem Schwingkörper elastisch derart gekoppelt, dass der Schwingkopf durch Einwirkung des ersten Sub-Schwingsystems in eine longitudinale harmonische Schwingung entlang der Achse x versetzt wird.

Bevorzugt ist der aus dem Schwingkopf, der Schwingfeder und dem Schwingkörper bestehende Resonator nur über die Federelemente des ersten Sub-Schwingsystems mit der seismischen Masse mechanisch verbunden.

Die Federkonstanten der Schwingfeder und der Federelemente sind bevorzugt je wenigstens 5 mal, vorzugsweise mehr als 10 bis 100 mal, grösser als die Federkonstante des Prüfkörpers.

Während einer Resonanzprüfung eines Prüfkörpers befindet sich Letzterer üblicherweise unter einer statischen Druck- oder Zugbeanspruchung, d.h. der dynamischen Schwingbeanspruchung des Prüfkörpers wird eine statische Druck- oder Zugspannung überlagert. Dazu ist die Traverse gegenüber der seismischen Masse bevorzugt verschiebbar angeordnet. Da die Federkonstanten der Schwingfeder und der Federelemente bevorzugt wesentlich grösser sind als die Federkonstante des Prüfkörpers, ist durch die gegenüber der seismischen Masse verschiebbare Traverse auch der Abstand zwischen der Traverse und dem Schwingkopf einstellbar.

Die Traverse ist bevorzugt über wenigstens eine Spindelsäule mit der seismischen Masse verbunden, wobei die zwischen der seismischen Masse und der Traverse liegende Länge jeder Spindelsäule mittels eines separaten Spindelantriebs einstellbar ist. Dabei muss jedoch auf eine synchrone Betätigung der Spindelantriebe geachtet werden.

Durch die gegenüber dem Schwingkopf und dem Schwingkörper sehr grosse Masse der Traverse, ist deren Schwingungsamplitude recht klein. Um die Schwingungsübertragung von der Traverse auf die Spindelsäulen weiter zu minimieren, sowie zur Gewährleistung einer elastischen, statischen Vorspannung zwischen der Traverse und jeder Spindelsäule, ist bevorzugt je eine Vorspannfeder zwischen Traverse und jeder Spindelsäule vorhanden.

Zur Messung und Regelung der statischen Druck- oder Zugsbeanspruchung des Prüfkörpers ist jede Spindelsäule mit einem statischen Kraftmesser ausgerüstet.

Zur Messung der dynamischen Beanspruchung des Prüfkörpers und deren Regelung, sowie zur Steuerung des elektromagnetischen Schwingungserregers ist zwischen Prüfkörper und Traverse wenigstens ein dynamischer Kraftmesser vorhanden.

Bevorzugt ist die Masse des Schwingkopfes zwischen 2 und 5 mal kleiner als die Masse des Schwingkörpers. Die Masse der seismischen Masse ist bevorzugt zwischen 2 und 5 mal grösser als die Masse des Schwingkörpers und die Masse der Traverse ist bevorzugt zwischen 1.5 und 3 mal grösser als die Masse des Schwingkopfes.

In einer weiter bevorzugten Ausführung der erfindungsgemässen Resonanzprüfmaschine besteht die den Schwingkopf und den Schwingkörper elastisch verbindende Schwingfeder aus einer Rohrfeder und einer durch den zylindrischen Hohlraum der Rohrfeder konzentrisch verlaufenden Ankerfeder, wobei besonders bevorzugt die Rohrfeder zwischen den Schwingkopf und den Schwingkörper zu liegen kommt und der Schwingkopf mit dem Schwingkörper über die Ankerfeder elastisch verspannt ist. In Anbetracht der hohen mechanischen Beanspruchung des Resonators in einem Resonanzfrequenzbereich zwischen 1000 und 2000 Hz, muss die Schwingfeder eine sehr hohe Steifigkeit aufweisen. Die Ankerfeder wird deshalb bevorzugt zur Installation der Schwingfeder verwendet, denn um eine zwischen Schwingkörper und Schwingkopf befindliche Rohrfeder mit einer hohen Steifigkeit, d.h. einer grossen Federkonstanten, mechanisch ausreichend stabil zu verspannen, werden zur Installation der Schwingfeder sehr hohe Druck- bzw. Zugbeanspruchungen benötigt.

Die Rohrfeder und gegebenenfalls auch die Ankerfeder bestehen bevorzugt aus Aluminium oder einer hochfesten Aluminiumlegierung. Dies erlaubt die Erreichung der für die Schwingfeder benötigten Federkonstanten.

In einer bevorzugten Ausführungsform weist die seismische Masse entlang der Achse x eine durchgehende Feder-Aussparung, insbesondere in Form einer Bohrung, zur Durchführung der Schwingfeder des Resonators auf. Um hierbei eine in Achse x gleichmässige mechanische Schwingerregung des Schwingkörpers zu gewährleisten, werden zweckmässigerweise wenigstens zwei parallel zueinander angeordnete Schwingungserreger verwendet. Diese Schwingungserreger sind bevorzugt in einem äquidistantem Zentriwinkel gegenüber der Achse x beabstandet angeordnet.

Aufgrund der grossen Masse der Traverse kann das zweite Sub-Schwingsystem auch als parallel geschaltet mit dem Schwingsystem bestehend aus dem in Serie geschalteten Resonator und dem ersten Sub-Schwingsystem angesehen werden. Daraus wird ersichtlich, dass die Federkonstante des Prüfkörpers keinen wesentlichen Einfluss auf das Schwingsystem bestehend aus dem in Serie geschalteten Resonator und dem ersten Sub-Schwingsystem hat. Demnach ist die Federkonstante der Schwingfeder praktisch allein frequenzbestimmend und die Federkonstante des Prüfkörpers hat nur einen vernachlässigbaren Einfluss auf die Prüffrequenz, d.h. auf die Resonanzfrequenz des Resonators. Folglich müssen die am Resonator beteiligten Massen, d.h. die Masse des Schwingkörpers und die Masse des Prüfkopfes, zusammen mit der Federkonstanten der Schwingfeder derart gewählt werden, dass eine Resonanzfrequenz zwischen 1000 und 2000 Hz erreichbar ist. Der Schwingweg am Schwingkopf muss derart ausgebildet sein, dass eine ausreichende Schwingkraft am Prüfkörper erzeugt wird. Der Schwingweg beträgt dabei bevorzugt zwischen 0.15 und 0.3 mm in jede Richtung um das Ruhemass, d.h. insgesamt ± 0.15 bis ± 0.3 mm. Bevorzugt beträgt der Schwingweg ± 0.2 mm.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen schematisch in
- Fig. 1 :: eine schematische Darstellung eines Längsschnitts durch die Längsachse x einer erfindungsgemässen Resonanzprüfmaschine;
- Fig. 2:: eine schematische Darstellung des Funktionsprinzips der erfindungsgemässen Resonanzprüfmaschine.

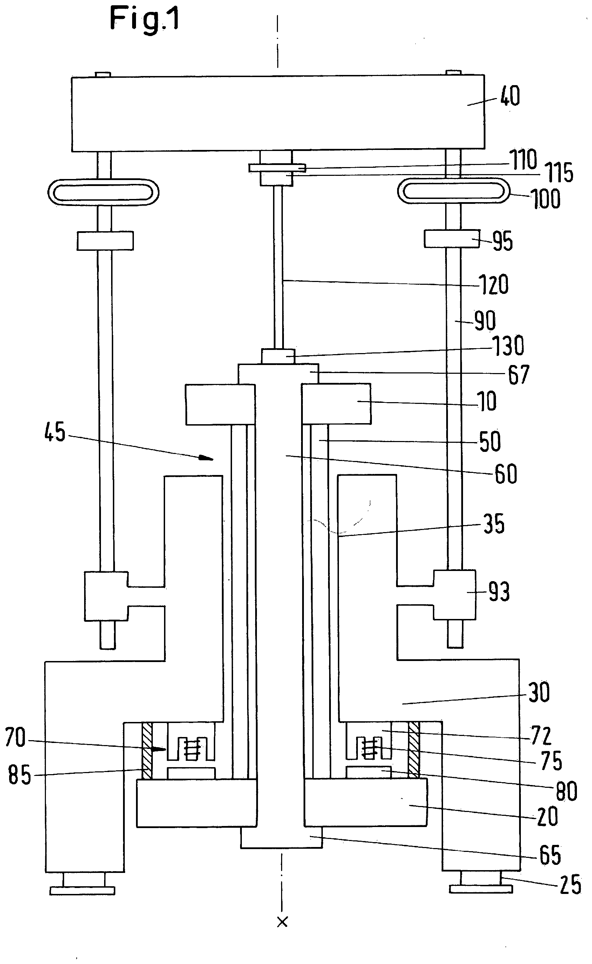

Der in Fig.1 schematisch dargestellte Längsschnitt durch eine erfindungsgemässe Resonanzprüfmaschine für eine Dauer-Schwingfestigkeitsprüfung weist eine mit elastischen Füssen 25 versehene seismische Masse 30 auf. Mit der seismischen Masse 30 fest verbunden sind wenigstens zwei Spindelantriebe 93, welche jeweils eine Spindelsäule 90 aufnehmen, wobei die Spindelsäulen 90 über eine Vorspannfeder 100 mit einer Traverse 40 verbunden sind. Die Traverse 40 ist somit durch die beiden Spindelsäulen 90 vertikal verschiebbar geführt, wobei die Spindelsäulen 90 und die beiden Spindelantriebe 93 eine Verstellvorrichtung für die Traverse 40 bilden. Um eine synchrone Bewegung der Traverse 40 zu gewährleisten, werden die einzelnen Spindelantriebe 93 bevorzugt mittels Zahnriemen (nicht gezeigt) über ein und dieselbe von einem Motor angetriebene Achse (nicht gezeigt) gemeinsam angetrieben.

Die Spindelsäulen 90 und die Spindelantriebe 93 erlauben die Einstellung des Abstandes zwischen der Traverse 40 und der seismischen Masse 30. Dadurch kann ein eingespannter Prüfkörper 120 einer statischen Zug- oder Druckbeanspruch ausgesetzt werden. Dabei ist die Traverse 40 über Vorspannfedern 100 mit der seismischen Masse 30 verbunden. Die Vorspannfedern 100 übertragen die statische Zug- oder Druckbeanspruchung des Prüfkörpers 120 und entkoppeln die dynamische Beanspruchung von der seismischen Masse.

Zur Messung der statischen Druck- oder Zugbeanspruchung des Prüfkörpers 120 ist zwischen den Vorspannfedern 100 und der Spindelsäulen 90 jeweils ein statischer Kraftmesser 95 vorhanden.

Ein Schwingkörper 20 ist über Federelemente 85 elastisch mit der seismischen Masse 30 verbunden. Parallel zu den Federelementen 85 befindet sich zwischen dem Schwingkörper 20 und der seismischen Masse 30 zwei elektromagnetische Schwingungserreger 70. Jeder Schwingungserreger 70 weist einen ersten, starr an der Unterseite der seismischen Masse 30 befestigten, aus ferromagnetischem Material bestehenden Elektromagneten 72 auf, der mit einem Magnetkern mit einer elektrisch leitenden Spule 75 versehen ist. Jeder Schwingungserreger 70 weist ferner eine bezüglich des aus ferromagnetischem Material bestehenden Elektromagneten 72 in der senkrechten Axialrichtung x bewegbare plattenförmige, ferromagnetische Ankerplatte 80 auf. Die Ankerplatte 80 ist starr mit dem Schwingkörper 20 verbunden. Die beiden Schwingungserregerteile, nämlich der Elektromagnet 72 und die Ankerplatte 80 werden von den Federelementen 85 parallel geschaltet überbrückt. Jedem Schwingungserreger 70 ist wenigstens ein Federelement 85 zugeordnet und alle vorhandenen Federelemente 85 sind konzentrisch um die Längsachse x angeordnet. Bevorzugt werden zwei Federelemente 85 pro Schwingungserreger 70 verwendet. Die Schwingungserreger 70 mit den zugeordneten Federelementen 85 sind alle genau gleich aufgebaut und alle Federelemente 85 weisen dieselbe Federkonstante auf. Die Federkonstante oder Federsteifigkeit der Federelemente 85 ist von deren Querschnittfläche und dem Elastizitätsmodul des Feder-Materials abhängig. Die Federelemente 85 sind bevorzugt aus Federstahl hergestellt. Die Federelemente 85 bilden zusammen mit dem Schwingkörper 20 und der seismischen Masse 30 das erste in der Längsachse x schwingbare Sub-Schwingsystem 160.

Die Federelemente 85 des ersten Sub-Schwingsystems 160 sind derart ausgebildet, dass in jedem Betriebszustand der Resonanzprüfmaschine im Schwingungserreger 70 ein freier Zwischenraum, d.h. ein Luftspalt, zwischen dem Elektromagneten 72 und der Ankerplatte 80 vorhanden ist. Ein typischer Zwischenraum beträgt zischen 0.1 bis 0.5 mm.

Der Schwingkörper 20 weist beispielsweise eine kreiszylindrische Form auf. Der Schwingkörper 20 ist mittig, d.h. axial zu seiner Längsachse x über eine Schwingfeder 45 mit einem Schwingkopf 10 verbunden. Die Längsachse des Schwingkörpers 20, diejenige der seismischen Masse 30, die Längsachse des Schwingkopfes 10 und die Längsachse der Traverse verlaufen einerseits parallel zur Längsachse der Resonanzprüfmaschine und fallen mit dieser zusammen. Der Schwingkopf 10 ist bevorzugt ein kreiszylinderförmiger Körper. Die in Fig. 1 gezeigte Schwingfeder 45 besteht aus einer Rohrfeder 50 in Form eines Hohlzylinders und einer innerhalb des zylindrischen Hohlraums der Rohrfeder 50 verlaufenden Ankerfeder 60. Die Rohrfeder besteht dabei aus einem Metallrohr, wobei ein Aluminiumrohr bevorzugt ist. Die Rohrfeder 50 befindet sich zwischen Schwingkörper 20 und Schwingkopf 10, wobei diese drei Bauteile mittels der Ankerfeder 60 trennfest miteinander verbunden, insbesondere verschraubt sind. Die Ankerfeder hat bevorzugt die Form eines Metallbolzens, welcher zumindest an den beiden Endbereichen ein Gewinde aufweist, so dass die drei Bauteile, d.h. Schwingkörper 20, Schwingfeder 45 und Schwingkopf 10 mittels einer unteren und einer oberen Zugankermutter (65, 67) trennfest miteinander verschraubt werden können. Der die Ankerfeder 60 bildende Metallbolzen besteht bevorzugt aus Aluminium. Die Ankerfeder und die Rohrfeder bilden zusammen die Schwingfeder 45. Die miteinander verschraubten, über die Schwingfeder 45 elastisch verbundenen Schwingkörper 20 und Schwingkopf 10 bilden den Resonator 155, welcher mechanisch nur über die Federelemente 85 mit der seismischen Masse 30 und über einen allfällig in die Resonanzprüfmaschine eingespannten Prüfkörper 120 mit der Traverse 40 verbunden ist.

Die Längsachse x des Resonators 155 fällt mit der Längsachse x der Resonanzprüfmaschine zusammen. Hierbei verläuft die Schwingfeder 45 durch eine Feder-Aussparung 35 der seismischen Masse 30. Die Federaussparung 35 der seismischen Masse 30 verläuft entlang der Achse x durchgehend und stellt bevorzugt eine Längsbohrung entlang der Achse x dar. Folglich weist die seismische Masse eine zylinderförmige Ausnehmung 35 auf, durch welche die Rohrfeder 50 und die Ankerfeder 60 des Resonators 155 führt.

Der Resonator 155 ist durch seine Materialwahl und seine Dimensionierung derart konzipiert, dass er nur in axialer Richtung, d.h. entlang der Achse x, schwingen kann.

Zur Vornahme einer Schwingfestigkeitsprüfung eines Prüfkörpers 120 wird der Prüfkörper 120 zwischen einem oberen, starr mit der Traverse 40 verbundenen Halteelement 115 und einem unteren, starr mit dem Schwingkopf 10 verbundenen Prüfkörper-Halteelement 130 eingespannt. Dabei bildet der Prüfkörper 120 zusammen mit dem Schwingkopf 10 und der Traverse 40 das zweite in Längsachse x schwingbare Sub-Schwingsystem 150.

Zwischen dem Prüfkörper 120, respektive der obere Prüfkörperhalterung 115 und der Traverse 40 befindet sich ein dynamischer Kraftmesser 110, vorzugsweise ein Piezoelement-Kraftmesser, welcher die dynamisch wirkenden Kräfte der Schwingungen messen kann.

Die Resonanzprüfmaschine weist auch einen Elektronikteil auf (nicht gezeigt). Dieses enthält zum einen eine Mess- und Regelelektronik verbunden mit dem statischen Kraftmesser 95 und dem Getriebemotor für die Spindelantriebe 93 und zum anderen eine Mess- und Regelelektronik verbunden mit dem dynamischen Kraftmesser 110 und den Schwingungserregern 70. Weiter weisen die Regelteile Einstellfunktionen auf, um gewisse Parameter, wie die Amplitude der Schwingkraft oder die statische Druck- oder Zugkraft einzustellen. Die Einstellfunktionen dienen bei der Durchführung einer Schwingfestigkeitsprüfung auch zur Veränderung von Parametern gemäss einem vorbestimmten Programm.

Wenn der Prüfkörper 120 einer Schwingfestigkeitsprüfung unterzogen wird, werden mittels des Schwingungserregers 70 entlang der Längsachse x verlaufende Schwingungsbewegungen erzeugt. Dabei werden ausser dem Prüfkörper 120, dem Schwingkopf 10 und dem Schwingkörper 20 noch weitere Teile der Resonanzprüfmaschine zum Schwingen gebracht, d.h. auch die seismische Masse 30 und die Traverse 40 können in eine leichte Schwingung geraten, wobei jedoch die entsprechenden Schwingungsamplituden im Vergleich zu den Schwingungen des Prüfkörpers 120, des Schwingkopfes 10 und des Schwingkörpers 20 recht klein sind (wegen der gegenüber dem Schwingkörper 20 und dem Schwingkopf 10 viel grösseren Massen der seismischen Masse 30 und der Traverse 40).

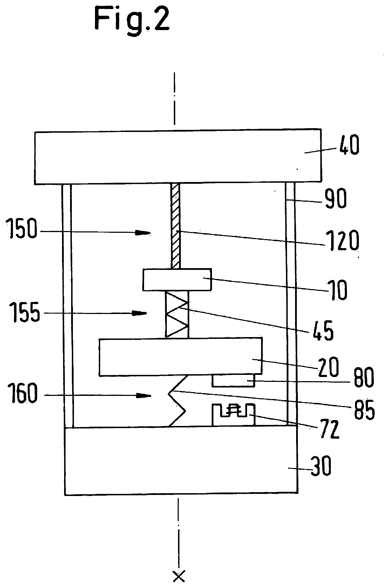

Figur 2 zeigt schematisch das Funktionsprinzip der erfindungsgemässen Resonanzprüfmaschine mit den drei in Serie geschalteten Schwingsystemen 150, 155, 160. Dabei befindet sich zwischen dem ersten und dem zweiten Sub-Schwingsystem 150, 160 der Resonator 155 enthaltend den Schwingkopf 10, den Schwingkörper 20 und die Schwingfeder 45. Der Prüfkörper 120 ist Teil des zweiten Sub-Schwingsystems 150 enthaltend weiter den Schwingkopf 10 und die Traverse 40. Das erste Sub-Schwingsystem 160 enthaltend den Schwingkörper 20, die seismische Masse 30 und die Federelemente 85 dient der Schwingungserregung des Resonators 155, wobei das erste Sub-Schwingsystem 160 durch elektromagnetische Schwingungserreger 70 erregbar ist. Fig. 2 zeigt der Einfachheit halber nicht die Mittel zur statischen Zug- oder Druckbeaufschlagung des Prüfkörpers 120.

## Patentansprüche

1. Resonanzprüfmaschine für die Schwingfestigkeitsprüfung eines zwischen einer Traverse (40) und einem Schwingkopf (10) eingespannten Prüfkörpers (120), wobei der Schwingkopf (10), der Prüfkörper (120) und die Traverse (40) Teil eines in einer Achse x schwingbaren zweiten Sub-Schwingsystems (150) sind, bei welchem der Prüfkörper (120) und ein Resonator (155) enthaltend den Schwingkopf (10), eine Schwingfeder (45) und einen Schwingkörper (20) nacheinander in Serie entlang der Achse x angeordnet sind,
**dadurch gekennzeichnet, dass**
in Serie zum zweiten Sub-Schwingsystem (150) und dem Resonator (155) ein ebenfalls entlang der Achse x schwingbares erstes Sub-Schwingsystem (160) vorhanden ist, wobei das erste Sub-Schwingsystem (160) den Schwingkörper (20), Federelemente (85) und eine seismische Masse (30) sowie elektromagnetische Schwingungserreger (70) enthält.

2. Resonanzprüfmaschine nach Anspruch 1, **dadurch gekennzeichnet, dass** der Schwingkopf (10) über die Schwingfeder (45) mit dem Schwingkörper (20) elastisch derart gekoppelt ist, dass der Schwingkopf (10) durch Einwirkung des ersten Sub-Schwingsystems (160) in eine longitudinale harmonische Schwingung entlang der Achse x bringbar ist.

3. Resonanzprüfmaschine nach Anspruch 1, **dadurch gekennzeichnet, dass** die elektromagnetischen Schwingungserreger (70) parallel zu den Federelementen (85) angeordnet sind.

4. Resonanzprüfmaschine nach Anspruch 1, **dadurch gekennzeichnet, dass** wenigstens zwei parallel angeordnete Schwingungserreger (70) vorhanden sind.

5. Resonanzprüfmaschine nach Anspruch 4, **dadurch gekennzeichnet, dass** die Schwingungserreger (70) in einem äquidistantem Zentriwinkel gegenüber der Achse x beabstandet angeordnet sind.

6. Resonanzprüfmaschine nach Anspruch 1, **dadurch gekennzeichnet, dass** die Federkonstanten der Schwingfeder (45) und der Federelemente (85) je wenigstens 5 mal, vorzugsweise mehr als 10 mal grösser sind als die Federkonstante des Prüfkörpers (120).

7. Resonanzprüfmaschine nach Anspruch 1, **dadurch gekennzeichnet, dass** zur statischen Druck- oder Zugbeanspruchung des Prüfkörpers (120) die Traverse (40) gegenüber der seismischen Masse (30) verschiebbar angeordnet ist, wobei durch die Serienschaltung der ersten und zweiten Sub-Schwingsysteme (150, 160) und des Resonators (155) der Abstand zwischen der Traverse (40) und dem Schwingkopf (10) einstellbar ist.

8. Resonanzprüfmaschine nach Anspruch 7, **dadurch gekennzeichnet, dass** die Traverse (40) über wenigstens eine Spindelsäule (90) mit der seismischen Masse (30) verbunden ist, wobei die zwischen der seismischen Masse (30) und der Traverse (40) liegende Länge jeder Spindelsäule (90) mittels einem separaten Spindelantrieb (93) einstellbar ist.

9. Resonanzprüfmaschine nach Anspruch 7, **dadurch gekennzeichnet, dass** zur Entkoppelung einer Schwingungsübertragung von der Traverse (40) auf die Spindelsäulen (90) und zur Gewährleistung einer elastischen, statischen Vorspannung zwischen der Traverse (90) und jeder Spindelsäule (90) je eine Vorspannfeder (100) vorhanden ist.

10. Resonanzprüfmaschine nach Anspruch 9, **dadurch gekennzeichnet, dass** jede Spindelsäule (90) mit einem statischen Kraftmesser (95) zur Messung und Regelung der statischen Druck- oder Zugsbeanspruchung des Prüfkörpers (120) ausgerüstet ist.

11. Resonanzprüfmaschine nach Anspruch 1, **dadurch gekennzeichnet, dass** der aus dem Schwingkopf (10), der Schwingfeder (45) und dem Schwingkörper (20) bestehende Resonator (155) nur über die Federelemente (85) des ersten Sub-Schwingsystems (160) mit der seismischem Masse (30) mechanisch verbunden ist.

12. Resonanzprüfmaschine nach Anspruch 1, **dadurch gekennzeichnet, dass** zwischen Prüfkörper (120) und Traverse (40) ein dynamischer Kraftmesser (110) zur Messung der dynamischen Beanspruchung des Prüfkörpers (120) und deren Regelung sowie zur Steuerung des elektromagnetischen Schwingungserregers (70) vorgesehen ist.

13. Resonanzprüfmaschine nach Anspruch 1, **dadurch gekennzeichnet, dass** die Masse des Schwingkopfes (10) zwischen 2 und 5 mal kleiner ist als die Masse des Schwingkörpers (20).

14. Resonanzprüfmaschine nach Anspruch 1, **dadurch gekennzeichnet, dass** die Masse der seismischen Masse (30) zwischen 2 und 5 mal grösser ist als die Masse des Schwingkörpers (20).

15. Resonanzprüfmaschine nach Anspruch 1, **dadurch gekennzeichnet, dass** die Masse der Traverse (40) zwischen 1.5 und 3 mal grösser ist als die Masse des Schwingkopfes (10).

16. Resonanzprüfmaschine nach Anspruch 1, **dadurch gekennzeichnet, dass** die den Schwingkopf (10) und den Schwingkörper (20) elastisch verbindende Schwingfeder (45) aus einer Rohrfeder (50) und einer durch den zylindrischen Hohlraum der Rohrfeder (50) konzentrisch verlaufenden Ankerfeder (60) besteht, wobei die Rohrfeder (50) zwischen den Schwingkopf (10) und den Schwingkörper (20) zu liegen kommt und der Schwingkopf (10) mit dem Schwingkörper (20) über die Ankerfeder (60) elastisch verspannt ist.

17. Resonanzprüfmaschine nach Anspruch 16, **dadurch gekennzeichnet, dass** die Rohrfeder (50) und gegebenenfalls auch die Ankerfeder (60) aus Aluminium oder einer hochfesten Aluminiumlegierung bestehen.

18. Resonanzprüfmaschine nach Anspruch 1, **dadurch gekennzeichnet, dass** die seismische Masse (30) entlang der Achse x eine durchgehende Feder-Aussparung (35), insbesondere in Form einer Bohrung, zur Durchführung der Schwingfeder (45) des Resonators (155) aufweist.

## Claims

1. Resonance testing machine for testing the vibration resistance of a test body (120) clamped between a crossmember (40) and a vibrating head (10), the vibrating head (10), the test body (120) and the crossmember (40) being part of a second sub-vibration system (150) which can vibrate in an axis x and in which the test body (120) and a resonator (155) containing the vibrating head (10), a vibrating spring (45) and a vibrating body (20) are arranged successively in series along the axis x, **characterised in that** there is a first sub-vibration system (160) which is in series with respect to the second sub-vibration system (150) and the resonator (155) and which can also vibrate along the axis x, said first sub-vibration system (160) containing the vibrating body (20), spring elements (85) and a seismic mass (30) and electromagnetic vibration generators (70).

2. Resonance testing machine according to claim 1, **characterised in that** the vibrating head (10) is elastically coupled to the vibrating body (20) by the vibrating spring (45), such that the vibrating head (10) can be brought into a longitudinal harmonic vibration along the axis x by the action of the first sub-vibration system (160).

3. Resonance testing machine according to claim 1, **characterised in that** the electromagnetic vibration generators (70) are arranged in parallel with the spring elements (85).

4. Resonance testing machine according to claim 1, **characterised in that** at least two vibration generators (70) arranged in parallel are present.

5. Resonance testing machine according to claim 4, **characterised in that** the vibration generators (70) are arranged so as to be spaced apart at an equidistant central angle with respect to the axis x.

6. Resonance testing machine according to claim 1, **characterised in that** the spring constants of the vibrating spring (45) and the spring elements (85) are each at least 5 times, preferably more than 10 times greater than the spring constant of the test body (120).

7. Resonance testing machine according to claim 1, **characterised in that**, for the static compressive or tensile stress of the test body (120), the crossmember (40) is arranged so as to be displaceable relative to the seismic mass (30), the distance between the crossmember (40) and the vibrating head (10) being adjustable by means of the series connection of the first and second sub-vibration systems (150, 160) and the resonator (155).

8. Resonance testing machine according to claim 7, **characterised in that** the crossmember (40) is connected to the seismic mass (30) by at least one spindle column (90), the length of each spindle column (90) between the seismic mass (30) and the crossmember (40) being adjustable by means of a separate spindle drive (93).

9. Resonance testing machine according to claim 7, **characterised in that**, in order to decouple a vibration transmission from the crossmember (40) to the spindle columns (90) and to ensure elastic, static preloading, a preloading spring (100) is present between the crossmember (90) and each spindle column (90).

10. Resonance testing machine according to claim 9, **characterised in that** each spindle column (90) is equipped with a static dynamometer (95) for the measurement and closed-loop control of the static compressive or tensile stress of the test body (120).

11. Resonance testing machine according to claim 1, **characterised in that** the resonator (155) consisting of the vibrating head (10), the vibrating spring (45) and the vibrating body (20) is mechanically connected to the seismic mass (30) only by the spring elements (85) of the first sub-vibration system (160).

12. Resonance testing machine according to claim 1, **characterised in that** a dynamic dynamometer (110) is provided between the test body (120) and the crossmember (40) for the measurement and closed-loop control of the dynamic stress of the test body (120) and for the open-loop control of the electromagnetic vibration generator (70).

13. Resonance testing machine according to claim 1, **characterised in that** the mass of the vibrating head (10) is between 2 and 5 times smaller than the mass of the vibrating body (20).

14. Resonance testing machine according to claim 1, **characterised in that** the mass of the seismic mass (30) is between 2 and 5 times greater than the mass of the vibrating body (20).

15. Resonance testing machine according to claim 1, **characterised in that** the mass of the crossmember (40) is between 1.5 and 3 times greater than the mass of the vibrating head (10).

16. Resonance testing machine according to claim 1, **characterised in that** the vibrating spring (45) which elastically connects the vibrating head (10) and the vibrating body (20) consists of a tube spring (50) and an anchor spring (60) which extends concentrically through the cylindrical cavity of the tube spring (50), the tube spring (50) coming to rest between the vibrating head (10) and the vibrating body (20), and the vibrating head (10) being elastically clamped to the vibrating body (20) by the anchor spring (60).

17. Resonance testing machine according to claim 16, **characterised in that** the tube spring (50) and optionally also the anchor spring (60) consist of aluminium or a high-strength aluminium alloy.

18. Resonance testing machine according to claim 1, **characterised in that** the seismic mass (30) has a continuous spring recess (35) along the axis x, in particular in the form of a bore, for feeding through the vibrating spring (45) of the resonator (155).

## Revendications

1. Machine d'essai par résonance destinée à tester la résistance aux vibrations d'un corps d'essai (120) enserré entre une traverse (40) et une tête de vibration (10), dans laquelle la tête de vibration (10), le corps d'essai (120) et la traverse (40) font partie d'un second sous-système de vibration (150) pouvant vibrer dans un axe x, où le corps d'essai (120) et un résonateur (155) contenant la tête de vibration (10), un ressort de vibration (45) et un corps de vibration (20) sont agencés l'un après l'autre en série le long de l'axe x,
**caractérisée en ce que**
en série avec le second sous-système de vibration (150) et le résonateur (155) est présent un premier sous-système de vibration (160) pouvant également vibrer dans l'axe x, dans laquelle le premier sous-système de vibration (160) contient le corps de vibration (20), des éléments de ressort (85) et une masse sismique (30) ainsi que des générateurs de vibration (70) électromagnétiques.

2. Machine d'essai par résonance selon la revendication 1, **caractérisée en ce que** la tête de vibration (10) est élastiquement couplée avec le corps de vibration (20) via le ressort de vibration (45) de sorte que la tête de vibration (10) puisse être amenée, par l'action du premier sous-système de vibration (160), dans une vibration harmonique longitudinale le long de l'axe x.

3. Machine d'essai par résonance selon la revendication 1, **caractérisée en ce que** les générateurs de vibration (70) électromagnétiques sont agencés parallèlement aux éléments de ressort (85).

4. Machine d'essai par résonance selon la revendication 1, **caractérisée en ce qu'**au moins deux générateurs de vibration (70) agencés parallèlement sont présents.

5. Machine d'essai par résonance selon la revendication 4, **caractérisée en ce que** les générateurs de vibration (70) sont agencés à distance selon un angle au centre équidistant par rapport à l'axe x.

6. Machine d'essai par résonance selon la revendication 1, **caractérisée en ce que** les constantes de raideur du ressort de vibration (45) et des éléments de ressort (85) sont chacune au moins 5 fois, de préférence plus de 10 fois, plus grandes que les constantes de raideur du corps d'essai (120).

7. Machine d'essai par résonance selon la revendication 1, **caractérisée en ce que**, pour l'effort de compression et de traction statique du corps d'essai (120), la traverse (40) est agencée de façon coulissante par rapport à la masse sismique (30), dans laquelle la distance entre la traverse (40) et la tête de vibration (10) peut être ajustée par le montage en série des premier et second sous-systèmes de vibration (150, 160) et du résonateur (155).

8. Machine d'essai par résonance selon la revendication 7, **caractérisée en ce que** la traverse (40) est reliée à la masse sismique (30) via au moins une colonne fuselée (90), dans laquelle la longueur de chaque colonne fuselée (90) située entre la masse sismique (30) et la traverse (40) peut être ajustée au moyen d'un entraînement à broche (93) séparé.

9. Machine d'essai par résonance selon la revendication 7, **caractérisée en ce que**, pour découpler une transmission de vibration de la traverse (40) vers la colonne fuselée (90) et pour garantir une précontrainte élastique et statique entre la traverse (40) et chaque colonne fuselée (90), est présent dans chaque cas un ressort de précontrainte (100).

10. Machine d'essai par résonance selon la revendication 9, **caractérisée en ce que** chaque colonne fuselée (90) est équipée d'un dynamomètre statique (95) pour mesurer et régler l'effort de compression et de traction statique du corps d'essai (120).

11. Machine d'essai par résonance selon la revendication 1, **caractérisée en ce que** le résonateur (155) constitué de la tête de vibration (10), du ressort de vibration (45) et du corps de vibration (20) est mécaniquement relié à la masse sismique (30) uniquement via les éléments de ressort (85) du premier sous-système de vibration (160).

12. Machine d'essai par résonance selon la revendication 1, **caractérisée en ce qu'**un dynamomètre dynamique (110) est prévu entre le corps d'essai (120) et la traverse (40) pour mesurer l'effort dynamique du corps d'essai (120) et son réglage ainsi que pour commander le générateur de vibration (70) électromagnétique.

13. Machine d'essai par résonance selon la revendication 1, **caractérisée en ce que** la masse de la tête de vibration (10) est entre 2 et 5 fois plus petite que la masse du corps de vibration (20).

14. Machine d'essai par résonance selon la revendication 1, **caractérisée en ce que** la masse de la masse sismique (30) est entre 2 et 5 fois plus grande que la masse du corps de vibration (20).

15. Machine d'essai par résonance selon la revendication 1, **caractérisée en ce que** la masse de la traverse (40) est entre 1,5 et 3 fois plus grande que la masse de la tête de vibration (10).

16. Machine d'essai par résonance selon la revendication 1, **caractérisée en ce que** le ressort de vibration (45) reliant élastiquement la tête de vibration (10) et le corps de vibration (20) est constitué d'un ressort tubulaire (50) et d'un ressort d'induit (60) se déroulant de façon concentrique à travers l'espace creux cylindrique du ressort tubulaire (50), dans laquelle le ressort tubulaire (50) en arrive à se situer entre la tête de vibration (10) et le corps de vibration (20), et la tête de vibration (10) est élastiquement tendue avec le corps de vibration (20) via le ressort d'induit (60).

17. Machine d'essai par résonance selon la revendication 16, **caractérisée en ce que** le ressort tubulaire (50) et le cas échéant également le ressort d'induit (60) sont constitués d'aluminium ou d'un alliage d'aluminium à hautes performances.

18. Machine d'essai par résonance selon la revendication 1, **caractérisée en ce que** la masse sismique (30) présente, le long de l'axe x, un évidement de ressort (35) traversant, en particulier sous la forme d'un alésage, pour faire passer le ressort de vibration (45) du résonateur (155).
